# EUROPÄISCHE PATENTANMELDUNG

(11) **EP 4 461 602 A1**
(43) Veröffentlichungstag der Anmeldung: **13.11.2024**
(21) Anmeldenummer: 24170122.6
(22) Anmeldetag: 13.04.2024
(51) Int. Cl.: B60R 15/04, E03D 9/10

(54) **VORRICHTUNG ZUR LAUFENDEN ENTLEERUNG VON WECHSELBAREN SCHWARZWASSERTANKS IN MOBILEN CHEMIETOILETTEN**

(30) Priorität: 29.04.2023 DE 202023102354 U
(71) Anmelder: Demuth, Christian, 14542 Werder (DE)
(72) Erfinder: Demuth, Christian, 14542 Werder (DE)
(74) Vertreter: Gerschütz, Florian Matthias

(57) **Zusammenfassung**

Ein wechselbarer Schwarzwassertank, wie beispielsweise in Wohnmobilen verbaut, wird durch eine wechselbare Vorrichtung (1) ersetzt, welche die laufenden Entleerung in einen sekundären Schwarzwassertank oder eine externen Abwasseranschluss (11) ermöglicht.

## Beschreibung

### Hintergrund der Erfindung

Mobile Chemietoiletten, wie zum Beispiel in Wohnwägen oder Wohnmobilen eingebaut, verfügen über entnehmbare Schwarzwassertanks, welche an Entsorgungsstationen von Hand entleert werden.

Daneben sind Lösungen bekannt bei denen größere Schwarzwassertanks über eine Pumpe entleert werden, vor allem in großen Fahrzeugen mit einer höheren Anzahl von Nutzenden, wie beispielsweise Reisebusse oder auch in Expeditionsfahrzeugen.

### Zu lösendes Problem

Bei längeren Reisen ohne Zugang zu Entsorgungsstationen, oder auch in Ländern ohne ausreichend verfügbare Entsorgungsstationen, ist ein größerer Schwarzwassertank von Nöten.

Sofern der Raum hierfür aber beim Einbau der o.g. Chemietoilette nicht bereits vorgesehen ist, ist eine Nachrüstung aus Platzgründen in der Regel nicht möglich.

Ein Einbau an anderer Stelle im Fahrzeug führt zu dem Problem, das am bestehenden Schwarzwassertank aufwendigere Umbauten notwendig sind, um eine weitere Funktionalität zu gewährleisten. Je nach Niveauunterschied und Einbauort des größeren Schwarzwassertanks ist diese auch nicht möglich.

Hinzu kommt der Verlust der Entnahmemöglichkeit des Schwarzwassertanks zu Wartungs- und Reinigungszwecken sowie bei Störungen in der Anlage.

### Aufgabe der Erfindung

Aufgabe der Erfindung ist es, den Einbauort des bestehenden Schwarzwassertanks - ohne Umbauten am Chassis, der Nasszelle, der Wasserversorgung und der mobilen Chemietoilette - für eine Entleerung in einen größeren Schwarzwassertank an beliebiger Stelle, im oder unter dem Fahrzeug zu nutzen.

Eine weitere Aufgabe ist es, die Entnahme des bestehenden Schwarzwassertanks weiter zu gewährleisten, und die Toilette ohne Geruchsbelästigung und ohne den Einsatz von Chemie in nachhaltiger Weise zu nutzen.

### Lösung

Dies wird dadurch erreicht, dass der bisherige, entnehmbare Schwarzwassertank durch einen Schwarzwassertank mit Schwarzwasserpumpe mit Trockensumpf, Sensorik zur Niveauregulierung, Steuergerät und Fernbedienung ersetzt wird.

Hierbei kommt ein in den äußeren Abmessungen und Anschlüssen baugleicher, entnehm-barer, primärer Schwarzwassertank zum Einsatz, welcher zusätzlich über einen Flansch für die Abwasserdruckleitung zur Entleerung des Schwarzwassers sowie einen Anschluss zur Stromversorgung verfügt.

Wahlweise kann die Stromversorgung auch über einen Akkumulator (wechselbar) erfolgen.

Damit ist es möglich den Inhalt des primären Schwarzwassertanks automatisiert nach jedem Toilettengang abzupumpen. Als Ziel soll entweder ein sekundären Schwarzwassertank, un- abhängig von Niveau der beiden Tanks zueinander, oder ein Abwasseranschluss genutzt werden.

Des weiteren ist es möglich, die Vorrichtung nach Bedarf - beispielsweise nach Überfüllung des sekundären Schwarzwassertank - zu entnehmen und stattdessen einen klassischen Schwarzwassertank zu nutzen.

### Stand der Technik

Bisher sind verschiedene Lösungen bekannt, die aber alle entweder einen komplizierten Einbau und Rückbau einer Schwarzwasserpumpe vorgeben oder bei denen der bestehende Schwarzwassertank im Chassis verbleibt und eine Entleerung - über eine externe Pumpe oder über die Schwerkraft - in einen weiteren Schwarzwassertank oder eine Entsorgungsstation erfolgt.

Die wesentlichen Nachteile dabei sind, dass keine vollständige Entleerung des klassischen Schwarzwassertankes erfolgt und verbleibende Reste unangenehme Gerüche abgeben.

So wird in PD 2011 000 022 U ein "Apparate per smaltire acque nere" beschrieben, in welcher ein Sammeltank für Schwarzwasser über einen Auslassstutzen verfügt, welcher abnehmbar an eine Öffnung auf dem Deckel des Sammeltanks angeschlossen wird.

Der Inhalt wird dann, geregelt durch einen manuellen Schieber, durch ein Ansaugen in einen weiteren Tank entleert. Dies benötigt einen Benutzereingriff und der weitere Tank muss sowohl in unmittelbarer räumlicher Nähe als auch auf einem niedrigeren Niveau angeordnet sein.

In US 10 711 445 B2 wird ein "Suction device for a wastewater tank" beschrieben, welches beispielhaft für weitere Schutzrechte die Entleerung über die Schwerkraft mittels einer Anschlusskupplung und Saugglocke im Boden eines Schwarzwassertanks beschreibt.

WO 2021 069 769 A1 offenbart eine "Vehicle toilet cassette" mit einem im Inneren eines Schwarzwassertanks angeordneten, wasserdichten Beutel zum Sammeln der Inhalte der Kassette.

### Beschreibung der Erfindung anhand der Zeichnung

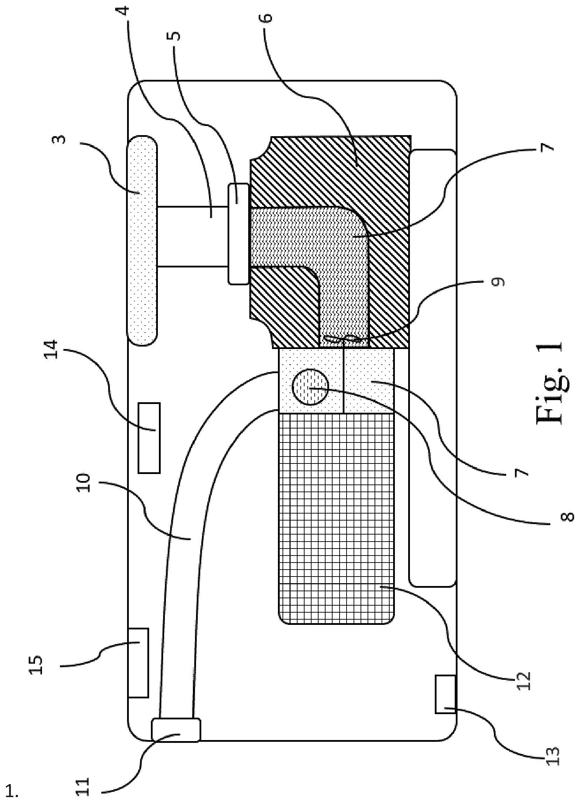

Fig. 1 zeigt beispielhaft den Aufbau der Vorrichtung (1) in Seitenansicht, bestehend aus dem Schwarzwassertankgehäuse (2), darin unterhalb des Zulaufflansches (3) ein Zulauf (4), der über den Dichtflansch (5), in das Innengehäuse (6) zu einem Trockensumpf führt.

Angeordnet am Innengehäuse (6) ist ein Pumpengehäuse (7), welches eine Pumpe (8) mit Zerhacker (9) enthält.

Über den Pumpenausgangsschlauch (10) an der Membranpumpe (8) wird das Schwarzwasser zum Ausgangsflansch (11) befördert. Der Motor (12) für die Pumpe (8) mit Zerhacker (9) ist mit dem Pumpengehäuse (7) fest verbunden.

Weitere Element im Schwarzwassertankgehäuse (2) sind Leckwarnsensor(13), Steuereinheit (14) und Energieversorgungsmodul (15).

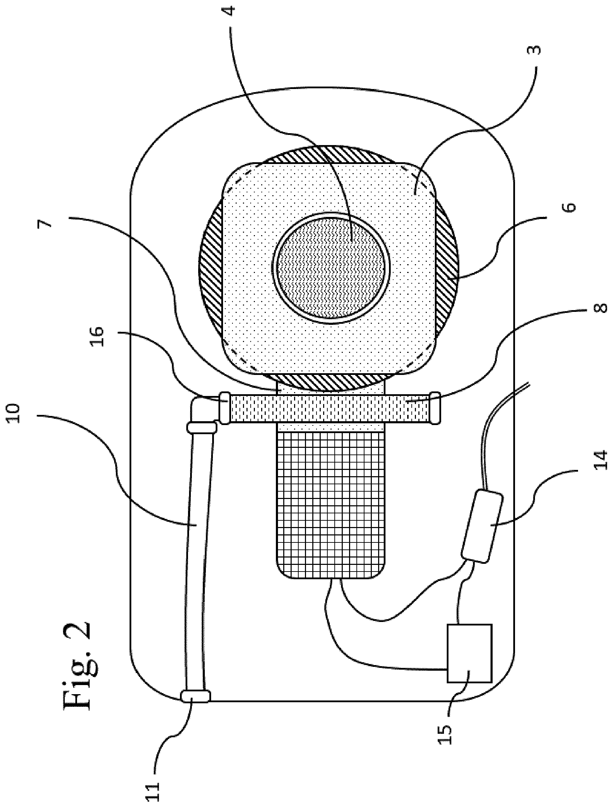

Fig. 2 zeigt beispielhaft den Aufbau der Vorrichtung (1) in Draufsicht, bestehend aus dem Schwarzwassertankgehäuse (2), Zulaufflansche (3), Zulauf (4), Innengehäuse (6), Pumpengehäuse (7) und Rückschlagventil (16) zwischen Pumpe (8) und Pumpenausgangsschlauch (10) sowie Motor (12), Ausgangsflansch (11), Steuereinheit (14) und Energieversorgungsmodul (15).

## Patentansprüche

1. Wechselbare Vorrichtung (1) zum Ersatz von wechselbaren Schwarzwassertanks in mobilen Chemietoiletten, **dadurch gekennzeichnet, dass** die Vorrichtung (1) einlaufendes Schwarzwasser mechanisch über einen Zerhacker (9) aufbereitet und über eine Pumpe zu einem Ausgangsflansch (11) fördert.

2. Wechselbare Vorrichtung nach Anspruch 1, **dadurch gekennzeichnet, dass** die Förderung des Schwarzwassers zum Ausgangsflansch (11) über ein Steuergerät (14) erfolgt.

3. Wechselbare Vorrichtung nach Anspruch 1 oder 2, **dadurch gekennzeichnet, dass** die Förderung über Sensorik oder externe Signalisierung mittels eines integrierten Steuergerätes (14) erfolgt.

4. Wechselbare Vorrichtung nach mindestens einem der Ansprüche 1 bis 3, **dadurch gekennzeichnet, dass** die Förderung manuell aktiviert wird.

5. Wechselbare Vorrichtung nach mindestens einem der Ansprüche 1 bis 4, **dadurch gekennzeichnet, dass** die Aufbereitung mit einer kombinierten Einheit aus Pumpe (8) und Zerhacker (9) erfolgt.

6. Wechselbare Vorrichtung nach mindestens einem der Ansprüche 1 bis 5, **dadurch gekennzeichnet, dass** die Betriebsenergie über ein Energieversorgungsmodul (15) mit externer Energieversorgung oder aus einem Bordnetz oder einem eigenen Energiespeicher oder eine Kombination der genannten erfolgt.

7. Wechselbare Vorrichtung nach mindestens einem der Ansprüche 1 bis 6, **dadurch gekennzeichnet, dass** die Vorrichtung über Leckwarnsensorik (13) und eine Signalisierungseinrichtung für Leckagen im Steuergerät (14) verfügt.

8. Wechselbare Vorrichtung nach mindestens einem der Ansprüche 1 bis 7, **dadurch gekennzeichnet, dass** das Steuergerät (14) kabellos oder kabelgebunden Signale an eine Empfangseinrichtung versendet.
